(19) Europäisches Patentamt
European Patent Office
Office européen des brevets

(11) EP 2 026 157 A1

(12) **EUROPÄISCHE PATENTANMELDUNG**

(43) Veröffentlichungstag:
**18.02.2009 Patentblatt 2009/08**

(51) Int Cl.:
***G05B 23/02*** *(2006.01)*

(21) Anmeldenummer: 08013491.9

(22) Anmeldetag: **26.07.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **17.08.2007 DE 102007038890**

(71) Anmelder: **Robert Bosch GmbH**
**70469 Stuttgart (DE)**

(72) Erfinder:
• **Ringering, Walter**
**97846 Partenstein (DE)**
• **Schwaab, Gerhard**
**97447 Gerolzhofen (DE)**
• **Wahler, Matthias**
**97450 Müdesheim (DE)**

(54) **Verfahren und Vorrichtung zur Bestimmung der Lebensdauer von im Arbeitsbetrieb befindlichen Bauteilen**

(57)    Die Erfindung betrifft ein Verfahren zur Bestimmung der Lebensdauer von im Arbeitsbetrieb befindlichen Maschinenbauteilen (2). Erfindungsgemäß werden dabei zur Bestimmung der Lebensdauer für das betreffende Maschinenbauteil (2) charakteristische Daten zugrunde gelegt und mittels einer Sensoreinrichtung (10) im Arbeitsbetrieb auf das Maschinenteil (2) einwirkende Belastungen bestimmt und Kennwerte, die für die auf das Maschinenbauteil (2) einwirkenden Belastungen charakteristisch sind, ermittelt und die Lebensdauer auf Grundlage der für das Maschinenbauteil (2) charakteristischen Daten und der Kennwerte ermittelt.

Fig. 1

EP 2 026 157 A1

**Beschreibung**

Die nachfolgende Erfindung bezieht sich auf ein Verfahren und eine Vorrichtung zur Ermittlung der Lebensdauer von im Arbeitsbetrieb befindlichen Maschinenbauteilen. Die vorliegende Erfindung wird unter Bezugnahme auf die Lebensdauer von Kugelgewindetrieben (KGT) beschrieben, es wird jedoch darauf hingewiesen, dass die Erfindung auch auf andere Maschinenbauteile, wie beispielsweise Linearführungen, Lager und dergleichen, angewandt werden kann.

Bei der Verwendung von Maschinenbauteilen ist es wünschenswert, deren Lebensdauer vorhersagen bzw. abschätzen zu können, um beispielsweise zum geeigneten Zeitpunkt, einen Austausch des betreffenden Maschinenbauteils vornehmen zu können.

Aus dem Stand der Technik ist es bekannt, die Lebensdauer von Maschinenbauteilen mit Hilfe von theoretischen Belastungszyklen bei der Konstruktion von Maschinen durchzuführen. Dabei werden die Maschinenelemente hinsichtlich ihrer Lebensdauer nur theoretisch bestimmt und damit können in der Realität davon abweichende Belastungen, welche zu einer vorzeitigen bzw. schnelleren Alterung führen, nicht berücksichtigt werden. Mit anderen Worten beruhen die Lebensdauerberechnungen und damit auch die vorzunehmende Auswahl eines bestimmten Gewindetriebs auf theoretischen Annahmen über den Belastungszyklus und die Betriebsarten. Dabei kann die Lebensdauer als Anzahl von Umdrehungen oder in Betriebsstunden berechnet werden und bildet die Grundlage für die Auswahl eines Gewindetriebs.

Der vorliegenden Erfindung liegt daher die Aufgabe zugrunde, die Lebensdauer von Maschinenbauteilen auch unter Berücksichtigung realer auf das Bauteil wirkende Belastungen zu ermitteln.

Dies wird erfindungsgemäß durch ein Verfahren nach Anspruch 1 und eine Vorrichtung nach Anspruch 9 erreicht. Vorteilhafte Ausführungsformen und Weiterbildungen sind Gegenstand der Unteransprüche.

Bei einem erfindungsgemäßen Verfahren zur Bestimmung der Lebensdauer von im Arbeitsbetrieb befindlichen Maschinenbauteilen werden zur Bestimmung der Lebensdauer für dieses betreffende Maschinenbauteil charakteristische Daten zugrunde gelegt. Weiterhin werden mittels einer Sensoreinrichtung im Arbeitsbetrieb auf das Maschinenteil einwirkende Belastungen bestimmt und Kennwerte, die für die auf das Maschinenbauteil einwirkenden Belastungen charakteristisch sind, ermittelt und die Lebensdauer auf Grundlage der für das Maschinenbauteil charakteristischen Daten und der Kennwerte ermittelt.

Unter im Arbeitsbetrieb befindlichen Maschinenbauteilen werden solche Maschinenbauteile verstanden, die jeweils aktuell in einer bestimmten Maschine zum Einsatz kommen und damit Belastungen unterworfen sind. Unter den charakteristischen Daten für das betreffende Maschinenbauteil werden insbesondere solche Daten verstanden, die die Lebensdauer dieses Maschinenbauteils im Einsatz mitbestimmen, wie beispielsweise die dynamische Tragzahl C des Bauteils, eine statische Tragzahl, evtl. Spindelsteigungen und dergleichen.

Bevorzugt handelt es sich bei der Lebensdauer um eine Restlebensdauer, die unter Berücksichtigung der bereits zurückgelegten Lebenszeit des Maschinenbauteils ermittelt wird. Genauer gesagt wird bei der Ermittlung der Restlebensdauer diejenige Zeit in Abzug gebracht, während der sich das Maschinenbauteil bereits im Betrieb befunden hatte.

Vorzugsweise werden mittels der Sensoreinrichtung die auf das Maschinenteil einwirkenden Belastungen indirekt bestimmt. Darunter wird verstanden, dass bevorzugt nicht bestimmte auf das Bauteil direkt wirkende Kräfte gemessen werden, sondern die Lebensdauer des betreffenden Maschinenelements durch die real gemessene Belastung (und die vorab eingegebenen Zustandsgrößen) im Antrieb berechnet wird. Dabei ist es beispielsweise möglich, aus dem Drehmoment und der Drehzahl eines entsprechenden Antriebs auf die auf das Maschinenbauteil wirkende Belastung zu schließen. Auch ist es möglich, beispielsweise den durch einen Antrieb fließenden Strom zu bestimmen, um hierdurch auf den Drehmoment dieses Antriebs zu schließen. Die Berechnung der Lebensdauer erfolgt damit bevorzugt durch die real gemessene Belastung in dem Antrieb. Die Restlebensdauer wird dem Betreiber angezeigt, um auf diese Weise beispielsweise Wartungsarbeiten zu optimieren. Bevorzugt werden auch die die Lebensdauer bestimmenden Zustandsdaten des Maschinenbauteils im Antrieb hinterlegt, wodurch eine langfristige Bewertung des Bauteils ermöglicht wird.

Vorteilhaft werden bei der Inbetriebnahme der Maschine die Daten des oder mehrerer Maschinenbauteile dem Antrieb (als Produktdaten) zugeordnet. Beim Betrieb der Maschine werden die realen Belastungen der Maschinenelemente aus den Zustandsgrößen des Antriebs bevorzugt online im Antrieb ermittelt und damit kann die Restlebensdauer der Maschinenelemente berechnet werden.

Vorteilhaft wird die Lebensdauer des betreffenden Maschinenbauteils mehrmals zu unterschiedlichen Zeiten bestimmt. Besonders vorteilhaft wird die Lebensdauer in fest vorgegebenen Zeitabständen über die gesamte Betriebsdauer des Maschinenbauteils hinweg bestimmt.

Bei einem weiteren vorteilhaften Verfahren wird bei der Ermittlung einer Lebensdauer zu einem vorgegebenen späteren Zeitpunkt eine bereits zu einem früheren Zeitpunkt ermittelte Lebensdauer berücksichtigt. Es wäre prinzipiell auch möglich, bei jeder neuen Berechnung sämtliche vorangegangenen Messdaten zu berücksichtigen. Insbesondere bei spät stattfindenden·Lebensdauerberechnungen müssten hierzu jedoch eine hohe Anzahl an einzelnen Summanden aufsummiert werden. Daher schlägt diese vorteilhafte Vorgehensweise vor, anstelle einer Summierung über alle Summanten diejenige Lebensdauer zu berücksichtigen, die im letzten bzw. in dem jeweils vorangegangenen Schritt ermittelt wurde. Damit erreicht man, dass eine Summation nicht über sehr viele Messwerte erfolgt, sondern lediglich die bereits im vorangegangenen Schritt ermittelte Lebensdauer mit den hinzugekommenen neuen Messwert gemeinsam berücksichtigt werden muss.

Vorzugsweise werden die für das Maschinenbauteil charakteristischen Daten bei der Inbetriebnahme des Maschinenbauteils ermittelt. Diese Ermittlung kann dabei durch tatsächliche Messungen erfolgen, es wäre jedoch auch möglich, dass die entsprechenden charakteristischen Daten beispielsweise einem Datenblatt des Herstellers des Maschinenbauteils entnommen werden.

Vorzugsweise handelt es sich bei den auf das Maschinenbauteil einwirkenden Belastungen um mechanische Belastungen des Maschinenbauteils. Bei einem weiteren vorteilhaften Verfahren sind die Maschinenbauteile einer Gruppe von Maschinenbauteilen entnommen, welche Lager, Kugelgewindetriebe, Führungen, insbesondere Linearführungen und dergleichen enthält.

Bei einem weiteren vorteilhaften Verfahren werden die für das Maschinenbauteil charakteristischen Daten in einer Antriebssteuerung der Arbeitsmaschine hinterlegt. So ist es beispielsweise möglich, die jeweiligen Daten in der Steuerung, die beispielsweise einem Motor zugeordnet ist, zu hinterlegen. Damit wird bei diesem Verfahren in einem ersten Schritt eine Implementierung auf Basis der integrierten SPS im Antrieb vorgenommen. Weiterhin wäre es jedoch auch möglich, die Funktion zur Berechnung der Lebensdauer in eine entsprechende Basissoftware zu integrieren, um auf diese Weise eine höhere Genauigkeit bei der Ermittlung der realen Belastung zu erreichen.

Die vorliegende Erfindung ist weiterhin auf eine Vorrichtung zur Bestimmung der Lebensdauer von Maschinenbauteilen gerichtet, wobei diese Vorrichtung eine Speichereinrichtung aufweist, in der für das betreffende Maschinenteil charakteristische Daten abgelegt sind. Weiterhin ist eine Prozessoreinrichtung vorgesehen, welche unter Verwendung der in der Speichereinrichtung abgelegten charakteristischen Daten die Lebensdauer des Maschinenbauteils ermittelt. Erfindungsgemäß weist die Vorrichtung eine Sensoreinrichtung auf, welche im Arbeitsbetrieb eine für eine auf das Maschinenbauteil wirkende Belastung charakteristische Größe bestimmt und einen Kennwert ausgibt, der für diese Belastung charakteristisch ist, wobei die Prozessoreinrichtung derartig gestaltet ist, dass sie auch unter Verwendung dieses Kennwerts die Lebensdauer des Maschinenbauteils ermittelt.

Auch bei der erfindungsgemäßen Vorrichtung werden damit sowohl Daten verwendet, welche das Maschinenbauteil selbst bezeichnen als auch solche Kennwerte, die Rückschlüsse auf die Belastung des Maschinenbauteils erlauben.

Vorzugsweise ist die Prozessoreinrichtung derart gestaltet, dass sie bei der Ermittlung der Lebensdauer auch die bereits zurückgelegte Lebenszeit des Maschinenbauteils berücksichtigt. Die folgende Erfindung ist weiterhin auf einen Führungswagen mit einer Vorrichtung der oben beschriebenen Art gerichtet. Damit kann sowohl die erfindungsgemäße Vorrichtung als auch das oben beschriebene erfindungsgemäße Verfahren modifiziert auf intelligente Führungswagen übertragen werden.

Weitere Vorteile und Ausführungsformen ergeben sich unter Bezugnahme auf die beigefügte Zeichnung: Diese zeigt:

Ein schematisches Blockdiagramm zur Veranschaulichung der vorliegenden Erfindung.

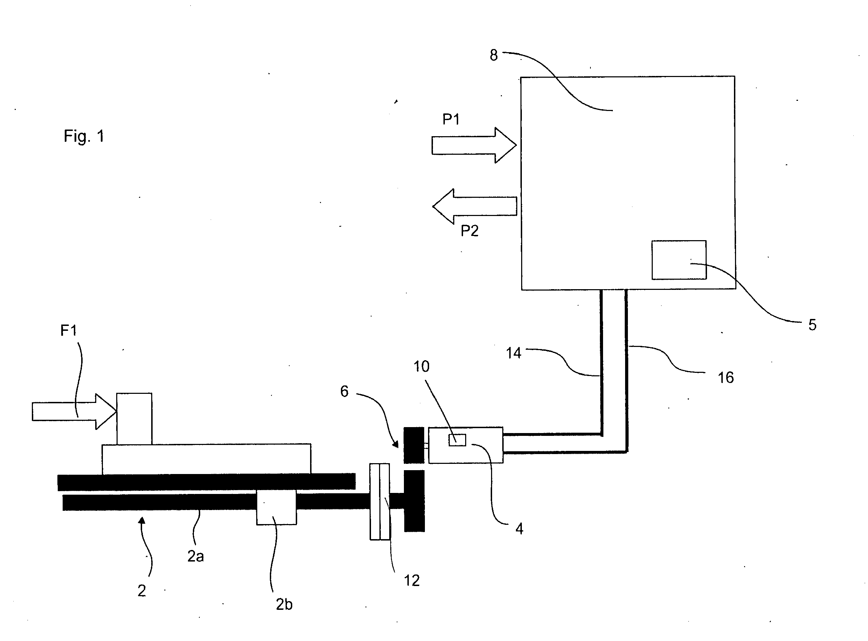

In Fig. 1 bezieht sich das Bezugszeichen 2 auf ein Maschinenbauteil, wobei es sich hier um einen Gewindetrieb, bestehend aus einer Gewindespindel 2a und einer Umlaufmutter 2b handelt. Diese Gewindespindel wird von einem Motor 4 über ein Getriebe 6 und gegebenenfalls eine Kupplungseinrichtung 12 angetrieben. Neben einer Prozesskraft F1 wirkt auf den KGT auch eine Reibungskraft.

Bei dem Motor 4 handelt es sich um einen Servomotor, in den eine oder mehrere Sensoreinrichtungen 10 integriert sind. Diese Sensoreinrichtungen 10 messen beispielsweise den Strom, der Rückschlüsse auf das Drehmoment erlaubt, Spannungen oder dergleichen. Diese Informationen werden von der Sensoreinrichtung über ein Feedbackkabel 14 an eine Prozessoreinrichtung 8 ausgegeben. Das Bezugszeichen 16 bezieht sich auf ein Leistungskabel zur Versorgung des Servomotors 4.

Die Prozessoreinrichtung 8 weist einen Servoregler mit integrierter Antriebs-SPS auf. Neben den Sensordaten, die über das Feedbackkabel 14 zugeführt werden, werden auch, wie eingangs erwähnt, spezifische Daten für das Maschinenbauteil 2 in die Prozessoreinrichtung 8 eingegeben (Pfeil P1). Weiterhin werden von der Prozessoreinrichtung 8 Meldungen ausgegeben (Pfeil P2). Bei diesen Meldungen kann es sich, wie oben erwähnt, um eine Angabe über die Restlebensdauer des KGT 2 handeln. Das Bezugszeichen 5 bezieht sich auf eine Speichereinrichtung, in der sowohl die spezifischen Daten für das Maschinenbauteil als auch die von der Steuereinrichtung ausgegebenen Werte gespeichert werden können.

Durch die erfindungsgemäße Anordnung wird es Benutzern ermöglicht, mit minimalen Eingaben bei der Inbetriebnahme die Restlebensdauer des KGT 2 und auch von Linearführungen und dergleichen zu ermitteln. Die Ermittlung der Restlebensdauer erfolgt, wie oben erwähnt, aufgrund von realen Belastungswerten.

Allgemein kann die Lebensdauer eines KGT mit folgender Formel berechnet werden:

$$L_{10} = \left( \frac{C}{F_{\text{äqui,ges}}} \right)^3 \cdot 10^6 \qquad\qquad (1).$$

Dabei bezeichnet $L_{10}$ die Lebensdauer in Umdrehungen, wobei die Lebensdauer auf eine 90%-ige Erlebenswahrscheinlichkeit gerichtet ist. Der Parameter C bezeichnet die sogenannte dynamische Tragzahl des Maschinenbauteils und wird in [N] angegeben. Der Parameter $F_{\text{äqui,ges}}$ bezeichnet die äquivalente Gesamtbelastung auf den KGT unter Berücksichtigung der Vorspannung. Die äquivalente Belastung wird dem theoretischen Zyklus entnommen, wobei dies unter der Annahme erfolgt, dass sich dieser Zyklus wiederholt und konstant bleibt.

Vorzugsweise wird die Belastung an dem KGT kontinuierlich ermittelt, wobei dies beispielsweise über Messungen aus den Drehmomentwerten des Antriebs erfolgt. Auf diese Weise kann aufgrund dieser kontinuierlichen Messung eine reale Lebensdauerermittlung vorgenommen werden.

Im Gegensatz zu der im Stand der Technik bekannten theoretischen Ermittlung der Lebensdauer kann beispielsweise durch eine tatsächlich höhere reale Belastung als im theoretisch angenommenen Zyklus ein früherer Verschleiß des Gewindetriebs (GT) diagnostiziert werden und damit können präventive Maßnahmen zum Produktionserhalt getroffen werden. Weiterhin kann durch eine tatsächliche geringere Belastung als im angenommenen Zyklus ein geplanter Tausch des GT entfallen bzw. verschoben werden.

Die Berechnung der mittleren Belastung geht von einem bekannten Zyklus mit einer bekannten Belastung aus und weiterhin davon, dass dieser Zyklus sich wiederholt. Die Berechnung erfolgt mit folgender Formel:

$$F_{\text{äqui}} = \sqrt[3]{F_1^3 \cdot \frac{n_1}{n_m} \cdot \frac{q_1}{100} + F_2^3 \cdot \frac{n_2}{n_m} \cdot \frac{q_2}{100} + ... + F_n^3 \cdot \frac{n_n}{n_m} \cdot \frac{q_n}{100}} =$$

$$= \sqrt[3]{F_1^3 \cdot \frac{q_{s1}}{100} + F_2^3 \cdot \frac{q_{s2}}{100} + ... + F_n^3 \cdot \frac{q_{sn}}{100}} \qquad\qquad (2).$$

In dieser Formel bezeichnet $F_{\text{äqui}}$ die äquivalente dynamische Gesamtbelastung für den KGT im gesamten Verfahrzyklus einschließlich der Vorspannungsberücksichtigung in der Einheit [N]. Der Parameter $F_{1\text{-}2\text{-}n}$ bezeichnet die Gesamtbelastung des ersten bis zweiten bis n-ten Zyklusanteil einschließlich der Vorspannung ebenfalls in [N]. Der Parameter $n_{1\text{-}2\text{-}n}$ bezeichnet die mittlere Drehzahl in dem besagten ersten bis zweiten bis n-ten Zyklusanteil in [min$^{-1}$] und der Parameter $n_m$ die mittlere Drehzahl ebenfalls in [min$^{-1}$].

Der Parameter $q_{1\text{-}2\text{-}n}$ bezeichnet den Zeitanteil der 1.-2.-n. Krafteinleitung in Prozent und der Parameter $q_{s1\text{-}s2\text{-}sn}$ den Streckenanteil nach der 1.-2.-n. Krafteinleitung. Problematisch ist jedoch, dass für eine belastungsabhängige Lebensdauer nicht der Zeitanteil sondern nur die Zeit der Belastungen bekannt ist. Daher wird vorzugsweise die Berechnung der mittleren Axialbelastung aufgrund von Umdrehungsanteilen in festen Zeitabschnitten durchgeführt. Dabei handelt es sich vorzugsweise um vorgegebene konstante Zeitabschnitte, nach denen jeweils die Axialbelastung ermittelt wird. Eine Berechnung kann dabei nach folgender Formel erfolgen:

$$F_{\text{äqui}} = \sqrt[3]{F_1^3 \cdot \frac{u_1}{u_{\text{ges},n}} + F_2^3 \cdot \frac{u_2}{u_{\text{ges},n}} + ... + F_n^3 \cdot \frac{u_n}{u_{\text{ges},n}}} =$$

$$= \sqrt[3]{F_1^3 \cdot \frac{n_1 \cdot t_a}{u_{\text{ges},n}} + F_2^3 \cdot \frac{n_2 \cdot t_a}{u_{\text{ges},n}} + ... + F_n^3 \cdot \frac{n_n \cdot t_a}{u_{\text{ges},n}}} \qquad (3).$$

Hierbei bezeichnet $u_1$ die Umdrehungen für die 1. Krafteinleitung, $U_{\text{ges},n}$ die Gesamtumdrehungen nach n-

Phasen und $t_a$ die Messzeit für die Krafteinleitung, genauer die Drehmomente oder Stromwerte die externe Kraftwerte auf dem KGT umgerechnet werden können, wobei die Einheit hier [min$^{-1}$] ist. Wie ausgeführt, werden mit Hilfe der Sensoreinrichtung Drehmomente oder Stromwerte gemessen. Es wäre jedoch prinzipiell auch möglich, direkt die Belastung auf den KGT 2 mit Hilfe geeigneter Kraftmesseinrichtungen zu messen.

Um eine möglichst genaue Erfassung der Krafteinleitungen zu erlauben, muss eine möglichst kurze Messzeit für $t_a$ gewählt werden. Bevorzugt wird die kürzeste Zeit verwendet, in der alle erforderlichen Parameter für die Berechnung zur Verfügung stehen.

Vorzugsweise wird bei den Messungen in zeitlichen Bereichen von einer Millisekunde gemessen. Da die Lebensdauererwartung jedoch bei mehreren tausend Stunden liegt, würde man, wenn man mit der oben genannten Formel (3) die Lebensdauer während des Betriebs errechnet, die Rechenleistung des Reglers überschreiten, weil bei einer Lebensdauer von beispielsweise 1000 Stunden und einer Messzeit von einer Millisekunde $3{,}6 \times 10^9$ Zahlen addiert werden müssten.

Daher wird, wie oben erwähnt, vorgeschlagen, nicht jeweils sämtliche Zahlen zu addieren sondern einen in einem vorangegangenen Schritt ermittelten Wert jeweils nur mit dem nächsten Messwert zu addieren. Genauer gesagt wird vorzugsweise eine Vorgehensweise mit folgender Formel vorgeschlagen:

$$F_{\ddot{a}qui} = \sqrt[3]{F_1^3 \cdot \frac{n_1 \cdot t_a}{u_{ges,n}} + F_2^3 \cdot \frac{n_2 \cdot t_a}{u_{ges,n}} + \ldots + F_n^3 \cdot \frac{n_n \cdot t_a}{u_{ges,n}}} = \sqrt[3]{Z(n)} \qquad (4).$$

Hier bezeichnet Z(n) den Zwischenwert nach n-Zyklusschritten und $F_{\ddot{a}qui,n}$ die äquivalente dynamische Belastung nach n-Zyklusschritten. Die Beschreibung der weiteren Parameter wurde bereits oben stehend angegeben.

Weiterhin gilt folgende Formel für die Gesamtumdrehungen:

$$u_{ges,x} = u_{ges,n} + t_a \cdot n_{n+1} + t_a \cdot n_{n+2} + \ldots + t_a \cdot n_x \qquad (5)$$

und für den Zwischenwert gilt zudem folgende Beziehung:

$$Z(x) = Z(n) \cdot \frac{u_{ges,n}}{u_{ges,x}} + F(n+1)^3 \frac{t_a \cdot n_{n+1}}{u_{ges,x}} + F(n+2)^3 \frac{t_a \cdot n_{n+2}}{u_{ges,x}} + \ldots + F(x)^3 \frac{t_a \cdot n_x}{u_{ges,x}} \qquad (6).$$

In diesen Gleichungen bezeichnet Z(x) den Zwischenwert nach x-Zyklusschritten (wobei x größer als n ist). F(x) bezeichnet die Gesamtbelastung des x-Zyklusanteils einschließlich Vorspannungsberücksichtigung in [N], $n_x$ die mittlere Drehzahl des x-ten Zyklusanteils in [min$^{-1}$] und $U_{ges,x}$ die Gesamtumdrehungen nach x-Phasen.

Damit wird für die Berechnung der Restlebensdauer ein Bild über den bisherigen Verlauf der Kraftbelastung berechnet, wobei diese Berechnung vorzugsweise in Zeitabständen erfolgt, die wenigstens eine Stunde betragen.

Für die dynamische äquivalente Gesamtbelastung des GT einschließlich Vorspannungsberücksichtigung (nach x-Zyklusschritten) ergibt sich:

$$F_{\ddot{a}qui,x} = \sqrt[3]{Z(x)} \qquad (7).$$

Im Folgenden wird die Berechnung der Lebensdauer mit der äquivalenten dynamischen Gesamtbelastung beschrieben. Die Lebensdauer ergibt sich dabei (vgl. auch Formel 1) nach folgender Beziehung:

$$L_{h,10} = \left( \frac{C}{F_{\ddot{a}qui}} \right)^{3} \cdot \frac{10^{6}}{60 \cdot n_{m}} \qquad (8).$$

Dabei bezeichnet $n_m$, wie oben erwähnt, die mittlere Drehzahl im gesamten Zyklus in [min$^{-1}$].

Die berechnete Restlebensdauer Lr des GT ergibt sich nach folgender Formel:

$$L_{r} = L_{h,10} - t_{x} \qquad (9).$$

Dabei wird die bisher "genutzte Zeit" $t_x$ nach folgender Gleichung berechnet:

$$t_{x} = x \cdot t_{a} \qquad (10).$$

x ist dabei eine gesamte Zahl und bezeichnet die Anzahl der jeweiligen Messschritte.

Bei einer bevorzugten Ausführungsform wird die hier beschriebene Lebensdauerberechnung mit Warnmeldungen in die jeweilige Antriebselektronik integriert. Dabei werden, wie oben erwähnt, die Eingangsdatentabellen ebenfalls in die Steuerung integriert. Vorzugsweise kann auch eine entsprechende Gerätebibliothek um eine Karteikarte erweitert werden, welche die mechanischen Elemente beschreibt. Vorzugsweise werden durch den Benutzer für das KGT charakteristische Daten, wie die dynamische Tragzahl C (in [N]), die statische Tragzahl Co (in [N]), die maximale Geschwindigkeit [min$^{-1}$], die Spindelsteigung [mm pro Umdrehung], die Spindellänge [mm] und gegebenenfalls auch die Vorspannungsklasse eingegeben, wobei diese Daten dem bestimmten Maschinenbauteil beispielsweise anhand einer Materialnummer zugeordnet werden.

Bei der Inbetriebnahme werden aus der entsprechenden Karteikarte, die einem bestimmten Maschinenbauteil zugeordneten Werte hinzugezogen und beim Antrieb mitberücksichtigt. Damit ist dem Antrieb ein GT oder eine LF mit ihren bzw. seinen Daten zugeordnet.

Im Folgenden wird beschrieben, wie die externe Axialbelastung ermittelt werden kann. Dies erfolgt mit folgender Formel:

$$F_{extern,Zyklusabschnitt} = \frac{2000 \cdot M_{KGT,Zyklusabschnitt} \cdot \pi \cdot 0{,}9}{P} \qquad (11).$$

Dabei bezeichnet $F_{extern}$ die externe Kraftbelastung auf den KGT in dem jeweiligen Zyklusabschnitt in [N] und $M_{KGT}$ das Moment, das auf den KGT im jeweiligen Zyklusabschnitt wirkt in [Nm]. Der Parameter P bezeichnet die Spindelsteigung in mm. Falls, wie in Fig. 1 gezeigt, ein Getriebe 6 mit einem Untersetzungsverhältnis zum Einsatz kommt, muss dieses noch in den Berechnungsformeln berücksichtigt werden.

Das im jeweiligen Zeitabschnitt auf den KGT wirkende Moment wird mit folgender Formel berechnet:

$$M_{KGT,Zyklusabschnitt} = M_{Motor,Zyklusabschnitt} - M_{Reibung,Zyklusabschnitt} - J \cdot \frac{d\omega,Zyklusanschnitt}{dt} \qquad (12).$$

Der Parameter $M_{KGT}$ bezeichnet das im jeweiligen Zyklusabschnitt auf den KGT wirkende Moment und der Parameter $M_{Reibung}$ das im jeweiligen Zyklusabschnitt im Antriebsstrang wirkende Moment ebenfalls in [Nm] und J das Massenträgermoment im Antriebsstrang.

Bei den Vorspannklassen 3%, 5%, 8% und 10% können folgende zwei Fälle zur Ermittlung der Belastung unterschieden werden (bei 0% und 2% Vorspannung gibt es nur den unten beschriebenen Belastungsfall b). Im ersten Fall (a) ist die äußere Last $F_{extern}$ kleiner als die Knickungspunktskraft $F_K$ (2,828 x $F_V$) oder dieser gleich, wobei $F_V$ die Vorspannkraft ist und sich aus der Vorspannung in [%] /100 x der dynamischen Tragzahl C in [N] ergibt. In diesem Fall ergibt sich eine Gesamtbelastung $F_{ges}$ für den KGT in einem Zyklusabschnitt nach folgender Formel:

$$ F_{ges} = \left( \frac{|F_{extern}|}{2{,}828 \times F_V} + 1 \right)^{\frac{3}{2}} \times F_V \qquad (13). $$

Dabei ist $F_{ges}$ die Gesamtbelastung auf den Kugelgewindetrieb in dem jeweiligen Zyklusabschnitt in [N], $F_{extern}$ die externe Belastung (dem Betrage nach) auf den Kugelgewindetrieb im jeweiligen Zyklusabschnitt in [N] und $F_V$ die Vorspannkraft.

Für den Fall, dass die äußere Kraft größer ist als die Knickpunktskraft, ergibt sich die Gesamtbelastung nach folgender Formel:

$$ F_{ges} = |F_{extern}| \qquad (14). $$

Dieser Fall sollte jedoch vermieden werden, da wegen der Vorspannungskraft ein Gleiten der Wälzkörper stattfinden und dies zu einem vorzeitigen Ausfall führen kann.

Im Rahmen der zyklischen Kraftermittlung kann beispielsweise mit der oben genannten Formel 11 einer Kraftkonstante ermittelt und über diese Kraftkonstante mit Hilfe des durch die Sensoreinrichtung gemessenen Stroms nach der Gleichung

$$ F_{extern} = F_K \times I $$

der externe Kraftwert, der auf den KGT wirkt, ermittelt werden. Dabei können bevorzugt in guter Näherung die Reibung und die Massenträgheit vernachlässigt werden.

In den Beschleunigungs- und Verzögerungsphasen sollte hier jedoch auch noch das Moment, das durch die Massenträgheit des Antriebsstranges (Motorgetriebe und Kugelgewindetrieb) verursacht wird, berücksichtigt werden. Durch die Eingabe der Gewindespindeldaten kann das Massenträgheitsmoment des Kugelgewindetriebs errechnet werden und das Massenträgermoment des Motors ist auch bekannt. Ein eventuell vorhandenes Getriebe kann vernachlässigt oder auch zusätzlich eingegeben werden. Da die Antriebsregelungseinrichtung bzw. die Prozessoreinrichtung 8 Kenntnis über die Beschleunigungsphasen hat, können auch diese Werte bei der Berechnung der Kraftwerte berücksichtigt werden.

In noch zu definierenden Zeitabständen können dann die äquivalente dynamische Kraft und damit die Restlebensdauer jeweils berechnet werden. In Kenntnis des Kraftwertes $F_K$ kann anschließend unter Verwendung der Formel 6 der Kraftwert $Z_n \cdot U_{ges}$ errechnet werden, wobei die oben erwähnte Beziehung zwischen dem Strom und $F_K$ verwendet wird. Die Gesamtzahl der zurückgelegten Umdrehungen $U_{ges}$ wird unter Verwendung von Formel 5 berechnet. Die mittlere Drehzahl $N_m$ wird weiterhin unter Berücksichtigung der einzelnen in den jeweiligen Zeitabschnitten gemessenen Drehzahlen und unter weiterer Berücksichtigung eines eventuellen Getriebes berechtet. Sind die einzelnen Daten bekannt, kann mit Hilfe der oben genannten Formeln das Kraftäquivalent berechnet werden und damit auch die neue theoretisch errechnete Lebensdauer LH, 10. Vorzugsweise kann, sobald der Wert der Restlebensdauer negativ wird, seitens des Antriebs eine Warnung erzeugt werden. Diese Warnung weist den Benutzer darauf hin, dass die aus der realen Belastung errechnete Lebensdauer abgelaufen ist und der GT auf seinen Verschleiß hin zu überprüfen ist.

Wie oben erwähnt, kann die hier beschriebene Lebensdauerermittlung für GTs auch modifiziert und auf Linearführungen, die ihren Belastungszustand erfassen und an die Steuerung melden können, ausgeweitet werden. Bevorzugt werden auch Daten, wie die zulässige Axialspindelbelastung $F_K$ (Knickung), eine kritische Drehzahl, ein Kurzhub sowie ein Überlastschutz, das heißt $F_{max} < 0{,}25$ Co berücksichtigt.

Sämtliche in den Anmeldungsunterlagen offenbarten Merkmale werden als erfindungswesentlich beansprucht, sofern sie einzeln oder in Kombination gegenüber dem Stand der Technik neu sind.

Bezugszeichenliste

| | |
|---|---|
| 2 | Gewindetrieb |
| 2a | Gewindespindel |
| 2b | Umlaufmutter |
| 4 | Servomotor |
| 5 | Speichereinrichtung |
| 6 | Getriebe |
| 8 | Prozessoreinrichtung |
| 10 | Sensoreinrichtung |
| 12 | Kupplungseinrichtung |
| 14 | Feedbackkabel |
| 16 | Leistungskabel |
| F1 | Prozesskraft |
| P1, P2 | Pfeile |

**Patentansprüche**

1. Verfahren zur Bestimmung der Lebensdauer von im Arbeitsbetrieb befindlichen Maschinenbauteilen (2),
   **dadurch gekennzeichnet, dass**
   zur Bestimmung der Lebensdauer für das betreffende Maschinenbauteil (2) charakteristische Daten zugrunde gelegt werden, mittels einer Sensoreinrichtung (10) im Arbeitsbetrieb auf das Maschinenteil einwirkende Belastungen bestimmt werden, und Kennwerte, die für die auf das Maschinenbauteil einwirkenden Belastungen charakteristisch sind, ermittelt werden und die Lebensdauer des Maschinenbauteils auf Grundlage der für das Maschinenbauteil charakteristischen Daten und der Kennwerte ermittelt wird.

2. Verfahren nach Anspruch 1,
   **dadurch gekennzeichnet, dass**
   die Lebensdauer eine Restlebensdauer ist, die unter Berücksichtigung der bereits zurückgelegten Lebenszeit des Maschinenbauteils (2) ermittelt wird.

3. Verfahren nach wenigstens einem der vorangegangenen Ansprüche,
   **dadurch gekennzeichnet, dass**
   die Lebensdauer des Maschinenteils (2) mehrmals zu unterschiedlichen Zeitpunkten bestimmt wird.

4. Verfahren nach wenigstens einem der vorangegangenen Ansprüche,
   **dadurch gekennzeichnet, dass**
   bei der Ermittlung einer Lebensdauer zu einem vorgegebenen späteren Zeitpunkt eine bereits zu einem früheren Zeitpunkt t1 ermittelte Lebensdauer berücksichtigt wird.

5. Verfahren nach wenigstens einem der vorangegangenen Ansprüche,
   **dadurch gekennzeichnet, dass**
   die für das Maschinenbauteil (2) charakteristischen Daten bei der Inbetriebnahme des Maschinenbauteils ermittelt werden.

6. Verfahren nach wenigstens einem der vorangegangenen Ansprüche,
   **dadurch gekennzeichnet, dass**
   die auf das Maschinenbauteil (2) einwirkenden Belastungen mechanische Belastungen sind.

**7.** Verfahren nach wenigstens einem der vorangegangenen Ansprüche,
**dadurch gekennzeichnet, dass**
die Maschinenbauteile (2) aus einer Gruppe von Maschinenbauteilen entnommen sind, welche Lager, Kugelgewindetriebe, Führungen, insbesondere Linearführungen und dergleichen enthält.

**8.** Verfahren nach wenigstens einem der vorangegangenen Ansprüche,
**dadurch gekennzeichnet, dass**
die für das Maschinenbauteil (2) charakteristischen Daten in einer Antriebssteuerung (8) der Arbeitsmaschine hinterlegt werden.

**9.** Vorrichtung zur Bestimmung der Lebensdauer von Maschinenbauteilen (2) mit einer Speichereinrichtung (5), in der für das betreffende Maschinenbauteil charakteristische Daten abgelegt sind, und mit einer Prozessoreinrichtung (8), welche unter Verwendung der in der Speichereinrichtung (5) abgelegten charakteristischen Daten die Lebensdauer des Maschinenbauteils ermittelt,
**dadurch gekennzeichnet, dass**
die Vorrichtung eine Sensoreinrichtung (10) aufweist, welche eine für eine im Arbeitsbetrieb auf das Maschinenbauteil (2) wirkende Belastung charakteristische Größe bestimmt und einen Kennwert ausgibt, der für diese Belastung charakteristisch ist, wobei die Prozessoreinrichtung (8) derart gestaltet ist, dass sie unter Verwendung dieses Kennwertes die Lebensdauer des Maschinenbauteils (2) ermittelt.

**10.** Vorrichtung nach Anspruch 9,
**dadurch gekennzeichnet, dass**
die Prozessoreinrichtung (8) derart gestaltet ist, dass sie bei der Ermittlung der Lebensdauer auch die bereits zurückgelegte Lebenszeit des Maschinenbauteils (2) berücksichtigt.

**11.** Führungswagen mit einer Vorrichtung nach wenigstens einem der vorangegangenen Ansprüche 9 - 10.

Fig. 1

Europäisches
Patentamt

European
Patent Office

Office européen
des brevets

**EUROPÄISCHER RECHERCHENBERICHT**

Nummer der Anmeldung

EP 08 01 3491

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2006/116758 A (CATERPILLAR INC [US]; SUNDERMEYER JEFFRY N [US]; PATEL NITIN R [US]; A) 2. November 2006 (2006-11-02) | 1-4,6, 8-10 | INV. G05B23/02 |
| Y | * Seite 29, Zeile 1 - Seite 32, Zeile 10 * ----- | 7 | |
| Y | US 2005/033557 A1 (HOUSE MICHAEL BRYNN [US] ET AL) 10. Februar 2005 (2005-02-10) * Absatz [0038] - Absatz [0050] * ----- | 7 | |
| A | US 2004/107067 A1 (ISHII FUMIHARU [JP] ET AL) 3. Juni 2004 (2004-06-03) ----- | | |

RECHERCHIERTE SACHGEBIETE (IPC)

G05B
G07C
G01H

Der vorliegende Recherchenbericht wurde für alle Patentansprüche erstellt

| Recherchenort | Abschlußdatum der Recherche | Prüfer |
|---|---|---|
| Den Haag | 12. November 2008 | Kelperis, K |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 3491

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2008

| Im Recherchenbericht angeführtes Patentdokument | Datum der Veröffentlichung | Mitglied(er) der Patentfamilie | Datum der Veröffentlichung |
|---|---|---|---|
| WO 2006116758 A | 02-11-2006 | AU 2006239171 A1<br>GB 2440684 A | 02-11-2006<br>06-02-2008 |
| US 2005033557 A1 | 10-02-2005 | KEINE | |
| US 2004107067 A1 | 03-06-2004 | KEINE | |

EPO FORM P0461

Für nähere Einzelheiten zu diesem Anhang : siehe Amtsblatt des Europäischen Patentamts, Nr.12/82